# EUROPÄISCHE PATENTSCHRIFT

(11) **EP 2 525 167 B1**
(45) Veröffentlichungstag und Bekanntmachung des Hinweises auf die Patenterteilung: **21.02.2018**
(21) Anmeldenummer: 12167812.2
(22) Anmeldetag: 14.05.2012
(51) Int. Cl.: F24J 2/52

(54) **Befestigungsvorrichtung für mindestens einen Sonnenkollektor**
Fastening device for at least one solar collector
Dispositif de fixation pour au moins un collecteur solaire

(30) Priorität: 20.05.2011 DE 102011102728
(43) Veröffentlichungstag der Anmeldung: 21.11.2012
(73) Patentinhaber: ROBERT BOSCH GMBH, 70442 Stuttgart (DE)
(72) Erfinder: Otting, Herbert, 49832 Beesten (DE)

(56) Entgegenhaltungen:
- EP-A1- 0 713 018
- EP-A1- 0 953 118
- EP-A2- 2 003 405
- WO-A1-2005/083194
- DE-A1- 10 233 973
- DE-U1-202004 015 811
- IT-A1- BS20 090 189

## Beschreibung

Die Erfindung betrifft eine Befestigungsvorrichtung für mindestens einen Sonnenkollektor nach dem Oberbegriff des Patentanspruches 1.
Gattungsgemäße Befestigungsvorrichtungen für mindestens einen Sonnenkollektor, insbesondere zur sogenannten Überdach- und Flachdachmontage, bestehen im Wesentlichen aus mindestens einer Profilschiene als Träger zur Aufnahme von Sonnenkollektoren. Bei der Überdachmontage werden die Profilschienen auf zugeordneten Dachhaken befestig, welche in die Lattung der Dacheindeckung eingreifen. In der Regel kommen mindestens zwei parallel ausgerichtete Profilschienen zum Einsatz, um daran ein Kollektorfeld, bestehend aus mehreren Sonnenkollektoren, zu befestigen. Zum Beispiel ergeben sich bereits mit vier Dachhaken und zwei Montageschienen als horizontal oder vertikal auf der Dachfläche ausgerichtete Träger Anschraubmöglichkeiten für Sonnenkollektoren. Bekannt sind daher Sonnenkollektoren mit einer vorzugsweise nach außen gerichteten Abwinklung an der Unterseite des einfassenden Rahmens, welche mit entsprechenden Durchbrechungen für eine Schraubverbindung oder zum Eingriff von Befestigungsteilen versehen sind. Weiterhin kennt man dafür seitliche Vorsprünge oder eine Hinterschneidung im unteren Bereich des einfassenden Rahmens.

Bekannte Befestigungsvorrichtungen für mindestens einen Sonnenkollektor sind beispielsweise in DE 102 33 973 A1 und EP2 333 453 A1 offenbart. Die Profilschienen sollen eine Verschiebbarkeit der Sonnenkollektoren bei der Montage ermöglichen. Dies ist wichtig, um beispielsweise die Rohrverbindungen zwischen den Sonnenkollektoren einfach herzustellen und das gesamte Kollektorfeld für einen guten optischen Eindruck genau auszurichten. Weil die Montagearbeiten teilweise unter ungünstigen Bedingungen auf schrägen Dachflächen und meistens auch mit kleinstmöglichem Personalaufwand erfolgen müssen, wird generell ein hoher Vorfertigungsgrad aller Bauteile angestrebt. Andererseits sind in einem Kollektorfeld nachträgliche Korrekturen bei eventuellen Montagefehlern auch nur mit größerem Aufwand möglich und daher zu vermeiden. Bekannte Befestigungsvorrichtungen für Sonnenkollektoren erforderten aber teilweise viele spezielle Kleinteile, welche bei der Handhabung möglicherweise leicht verloren gehen und auch eine entsprechende Schulung bzw. Erfahrung beim Personal voraussetzen. Außerdem war nicht immer gewährleistet, dass die Sonnenkollektoren nach dem Auflegen auf die Trägerkonstruktion noch geringfügig verschoben werden konnten, oder dass beim Lösen von Verbindungen zum Verschieben das Gewicht der Sonnenkollektoren gleichzeitig noch sicher abgetragen wurde.
Sogenannte Kollektorspanner sind also bekannt, entweder in einfacher Ausführung für einen Sonnenkollektor im äußeren Randbereich oder als doppelte Version für den Einsatz zwischen zwei Sonnenkollektoren. Bei ungünstigen Geometrien der Sonnenkollektor-Randbereiche können dabei möglicherweise die Schnittstellen zwischen Sonnenkollektor und Kollektorspanner bei der Montage von der Oberseite her nicht genau eingesehen werden. Es könnte daher vorkommen, dass die Sonnenkollektoren nicht richtig mit dem Montagesystem verbunden sind und sich im Laufe der Zeit eventuell lösen.
Der Erfindung liegt daher die Aufgabe zugrunde, die sogenannte Überdach- und Flachdachmontage von Sonnenkollektoren zu optimieren.
Erfindungsgemäß wurde dies mit den Merkmalen des Patentanspruches 1 gelöst. Vorteilhafte Weiterbildungen sind den Unteransprüchen zu entnehmen.
Die Befestigungsvorrichtung ist dadurch gekennzeichnet, dass der Kollektorspanner eine mechanische Anzeigevorrichtung aufweist, welche das Erreichen der richtigen Position bei der Montage des Kollektorspanners zwischen zwei Sonnenkollektoren signalisiert. Dazu besteht der Kollektorspanner aus einem als Niederhalter dienenden Oberteil und einem als Montagehilfe dienenden Unterteil mit integrierter mechanischer Anzeigevorrichtung. Eine Schraube durchgreift Oberteil und Unterteil vertikal im Zentrum und ist an der Unterseite mit einer zugeordneten Mutter zum Eingriff in die mindestens eine Trägerschiene versehen. Erfindungsgemäß ist das als Niederhalter dienende Oberteil an zwei zugeordneten seitlichen Stegen des Unterteils in Längsrichtung geführt. Weiterhin ist das Oberteil länger als das Unterteil bemessen und steht beidseitig in Längsrichtung über das Unterteil über, so dass es mit seinen beiden Endbereichen jeweils in den seitlichen Vorsprung oder in eine Hinterschneidung im unteren Bereich des einfassenden Rahmens eines Sonnenkollektors eingreift. Die Enden des Oberteils sind daher an die Geometrie des Sonnenkollektors angepasst.
Erfindungsgemäß weist das als Montagehilfe dienende Unterteil mit integrierter mechanischer Anzeigevorrichtung eine symmetrische Gestaltung auf und nimmt in jeder der Hälften einen unabhängig voneinander gelagerten Schieber auf, der ein Fußende und zwei als Anzeige dienenden kopfseitige Endbereiche aufweist. Dadurch zentriert sich der Kollektorspanner. Weiterhin besitzt das Unterteil außerhalb der längs verlaufenden seitlichen Stege zum Führen des Oberteils Vorsprünge mit Aufnahmekammern für die als Anzeige dienenden Endbereiche der Schieber sowie nach oben offene Durchbrechungen als Sichtfenster, wobei davon auf jeder Seite zwei angeordnet sind.
Vorzugsweise wird das Oberteil als Leichtmetallteil gefertigt, ist bügelartig nach oben gewölbt und besitzt an seiner Unterseite in den beiden Endbereichen Aussparungen oder Flächen für den Eingriff mindestens einer zugeordneten Zentrierhilfe auf der Oberseite des Unterteils.
In einer bevorzugten Ausführungsform ist ein Schieber im Wesentlichen T-förmig gestaltet, wobei das Fußende als Tastfläche vorgesehen ist, wobei die beiden kopfseitigen Endbereiche jeweils als Teil der Anzeige dienen und in einer zugeordneten Aufnahmekammer des Unterteils gelagert sind, und wobei am Längssteg des T-förmigen Schiebers ein Quersteg angebracht ist, welcher mit einer in Längsrichtung wirkenden Federvorrichtung am Unterteil korrespondiert. Die in Längsrichtung wirkende Federvorrichtung ist am Unterteil gelagert. Dabei wirken jeweils zwei symmetrisch angeordnete, beim Erreichen der richtigen Position bei der Montage vorgespannte Federelemente mit den zur Längsachse des Unterteils gerichteten Enden auf den Quersteg am Schieber. Ansonsten drückt das Federelement jeweils das Fußende eines Schiebers als Tastfläche so aus dem Unterteil heraus, dass dieses in der unmontierten Ausgangsposition stirnseitig übersteht. Die Federelemente sind vorzugsweise am Unterteil angeformt und in zugeordneten Aussparungen am Unterteil gelagert. Erfindungsgemäß ist das Fußende eines Schiebers als Tastfläche an einem Sonnenkollektor einem Vorsprung und/oder einer Begrenzung einer Hinterschneidung zugeordnet. Dabei wird das Erreichen der richtigen Position bei der Montage des Kollektorspanners zwischen zwei Sonnenkollektoren bzw. beim Zusammenschieben der Sonnenkollektoren auf der Profilschiene signalisiert, indem der Schieber durch den Druck auf die Tastfläche nach innen in das Unterteil geschoben wird und dessen beide kopfseitige Endbereiche sich jeweils in der zugeordneten Aufnahmekammer unter die als Sichtfenster dienende Durchbrechung verschieben. Dabei wird die Durchbrechung von innen her verschlossen. Vorzugsweise werden der Schieber oder mindestens dessen kopfseitige Endbereiche in einer anderen Farbe als das Unterteil ausgeführt, um die Anzeige durch die Farbkennung auffälliger zu gestalten. Bevorzugt wird der Schieber grün ausgeführt, weil der grüne Farbton vom Anwender als Signal für eine richtige Montage wahrgenommen wird.
In noch einer vorteilhaften Ausführungsform ist das Unterteil mit mindestens vier weiteren, vertikal wirkenden Federelementen als Zentrierhilfe versehen, wobei diese als laschenartige, schräg nach oben gerichtete Ausstellungen gestaltet sind und jeweils mit dem freien Ende an der Unterseite des Oberteils in zugeordnete Aussparungen eingreifen. Diese halten das Oberteil in Ausgangsposition.
Mit der Erfindung wird die Überdach- und Flachdachmontage von Sonnenkollektoren optimiert. Die Sonnenkollektoren können nach dem Auflegen auf die Trägerkonstruktion genau und sicher verschoben werden und werden von einer üblichen Abrutschsicherung gehalten. Dabei werden die Kollektorspanner nach Montage eines ersten Sonnenkollektors auf die mindestens eine Trägerschiene aufgelegt und zusammen mit einem zweiten Sonnenkollektor an den ersten herangeschoben. Da man von der Oberseite her eventuell nicht genau die Randbereiche eines Kollektorspanners bzw. die Angriffspunkte am Rahmen der Sonnenkollektoren sehen kann, weil der Spalt zwischen den beiden Rahmen der Sonnenkollektoren zu schmal ist, muss nur die erfindungsgemäße Anzeige im mittleren Bereich des Kollektorspanners beobachtet werden. Füllen sich die Anzeigefenster, also die vier Durchbrechungen im Unterteil mit dem farbigen Schieber, so besteht die Gewissheit, dass die Gesamtanordnung aus Sonnenkollektoren und Kollektorspanner sich in der richtigen Position befindet. Ein Monteur kann dann die zentrale Schraube von oben her anziehen. Montagefehler werden dadurch ausgeschlossen und parallel werden die Qualität der Kollektorbefestigung sowie die Sicherheit der gesamten Anordnung erhöht.
Das Herstellen der Rohrverbindungen zwischen den Sonnenkollektoren sowie das Ausrichten des gesamten Kollektorfeldes gestaltet sich dadurch sehr einfach. Das Personal wird entlastet, indem mit der Anzeigevorrichtung eindeutige Hinweise gegeben werden und zudem die Handhabung des Kollektorspanners dadurch selbsterklärend ist. Dessen Bestandteile sind aneinander unverlierbar fixiert und durch den integrierten Federmechanismus kehren die zueinander beweglichen Teile immer wieder beim Lösen der Schraube in Ausgangsposition zurück.
Die Zeichnung stellt ein Ausführungsbeispiel der Erfindung dar. Es zeigt:

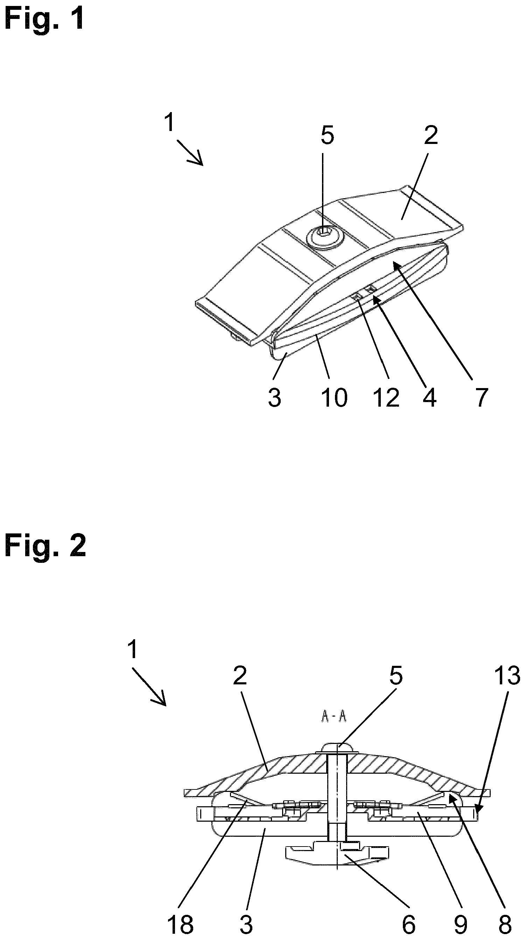

- Fig. 1:: Einen Kollektorspanner in einer perspektivischen Darstellung,
- Fig. 2:: einen vertikalen Längsschnitt durch einen Kollektorspanner,

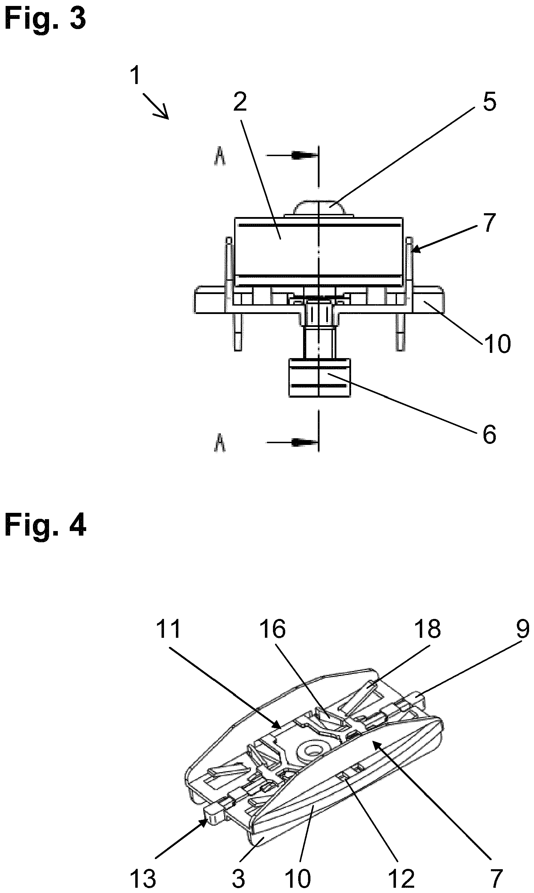

- Fig. 3:: einen Kollektorspanner in der Seitenansicht,
- Fig. 4:: ein Unterteil eines Kollektorspanners in einer perspektivischen Darstellung,
- Fig. 5:: ein Unterteil eines Kollektorspanners in der Draufsicht und
- Fig. 6:: einen in das Unterteil integrierbaren, beweglichen Schieber in einer perspektivischen Darstellung.

Die Befestigungsvorrichtung für mindestens einen Sonnenkollektor mit einem seitlichen Vorsprung oder einer Hinterschneidung im unteren Bereich des einfassenden Rahmens, insbesondere zur sogenannten Überdach- und Flachdachmontage, umfasst mindestens eine nicht dargestellte Trägerschiene zur Befestigung auf zugeordneten Dachhaken oder anderen Montagesystemen sowie mindestens einen in oder an einer Profilschiene geführten Kollektorspanner 1.

Der Kollektorspanner 1 weist eine mechanische Anzeigevorrichtung auf, welche das Erreichen der richtigen Position bei der Montage des Kollektorspanners 1 zwischen zwei Sonnenkollektoren signalisiert. Er besteht aus einem als Niederhalter dienenden Oberteil 2 und einem als Montagehilfe dienenden Unterteil 3 mit integrierter mechanischer Anzeigevorrichtung 4. Eine Schraube 5 durchgreift Oberteil 2 und Unterteil 3 vertikal im Zentrum und ist an der Unterseite mit einer zugeordneten Mutter 6 zum Eingriff in eine Profilschiene kombiniert.

Das als Niederhalter dienende, bügelartig nach oben gewölbte Oberteil 2 ist an zwei zugeordneten seitlichen Stegen 7 des Unterteils 3 in Längsrichtung geführt. Es steht in Längsrichtung über das Unterteil 3 beidseitig über, so dass es mit seinen beiden Endbereichen jeweils in den seitlichen Vorsprung oder eine Hinterschneidung im unteren Bereich des einfassenden Rahmens eines Sonnenkollektors eingreift. Dort erfolgt beim Anziehen der Schraube 5 eine kraftschlüssige Verspannung. Weiterhin ist das Oberteil 2 ist an seiner Unterseite in den beiden Endbereichen mit Aussparungen oder Flächen 8 für den Eingriff mindestens einer zugeordneten Zentrierhilfe auf der Oberseite des Unterteils 3 versehen.

Das als Montagehilfe dienende Unterteil 3 mit integrierter mechanischer Anzeigevorrichtung 4 besitzt eine symmetrische Gestaltung und nimmt in jeder der Hälften einen unabhängig voneinander gelagerten Schieber 9 auf.

Das Unterteil 3 weist außerhalb der längs verlaufenden seitlichen Stege 7 zum Führen des Oberteils 2 Vorsprünge 10 mit zur Innenseite hin offenen Aufnahmekammern 11 für die als Anzeige dienenden Endbereiche der Schieber 9 sowie auf jeder Seite zwei nach oben offene Durchbrechungen 12 als Sichtfenster auf.

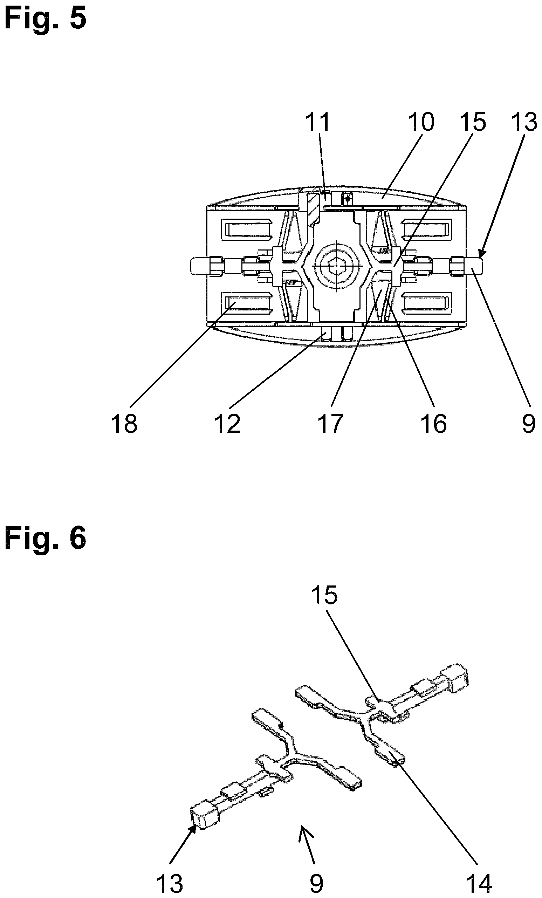

Ein Schieber 9, insbesondere gemäß Fig. 6, ist im Wesentlichen T-förmig gestaltet. Dabei ist das Fußende als Tastfläche 13 vorgesehen, die beiden kopfseitigen Endbereiche 14 dienen jeweils als Teil der Anzeige und sind jeweils in einer zugeordneten Aufnahmekammer 11 des Unterteils 3 gelagert, und am Längssteg des T-förmigen Schiebers 9 ist ein Quersteg 15 angebracht, welcher mit einer in Längsrichtung wirkenden Federvorrichtung am Unterteil 3 korrespondiert.

Diese ist am Unterteil 3 gelagert, wobei jeweils zwei symmetrisch angeordnete, beim Erreichen der richtigen Position bei der Montage vorgespannte Federelemente 16 mit den zur Längsachse des Unterteils 3 gerichteten Enden beidseitig auf den Quersteg 15 am Schieber 9 wirken. Im Auslieferungszustand, aber auch beim Lösen der Verbindung, drücken diese ansonsten jeweils das Fußende eines Schiebers 9 als Tastfläche 13 so aus dem Unterteil 3 heraus, dass dieses stirnseitig übersteht. Die Federelemente 16 sind am Unterteil 3 angeformt und in zugeordneten Aussparungen 17 gelagert.

Jeweils das Fußende eines Schiebers 9 als Tastfläche 13 korrespondiert an einem Sonnenkollektor mit einem Vorsprung und/oder einer Begrenzung einer Hinterschneidung. Das Erreichen der richtigen Montageposition des Kollektorspanners 1 zwischen zwei Sonnenkollektoren wird dann dadurch signalisiert, dass der Schieber 9 durch den über die Tastfläche 13 eingebrachten Druck entlang der Längsachse nach innen in das Unterteil 3 geschoben wird und dessen kopfseitige Endbereiche sich jeweils in der zugeordneten Aufnahmekammer 11 unter die als Sichtfenster dienende Durchbrechung 12 verschieben.

Zudem ist das Unterteil 3 mit mindestens vier weiteren, vertikal wirkenden Federelementen 18 als Zentrierhilfe versehen. Diese sind als laschenartige, schräg nach oben gerichtete Ausstellungen gestaltet und greifen jeweils mit dem freien Ende an der Unterseite des Oberteils 2 in einen zugeordneten Bereich ein.

## Patentansprüche

1. Befestigungsvorrichtung für mindestens einen Sonnenkollektor mit einem seitlichen Vorsprung oder einer Hinterschneidung im unteren Bereich des einfassenden Rahmens, insbesondere zur sogenannten Überdach- und Flachdachmontage, umfassend mindestens eine Trägerschiene zur Befestigung auf zugeordneten Dachhaken oder anderen Montagesystemen sowie mindestens einen in oder an der mindestens einen Trägerschiene geführten Kollektorspanner (1), wobei
der Kollektorspanner (1) eine mechanische Anzeigevorrichtung (4) aufweist, welche das Erreichen der richtigen Position bei der Montage des Kollektorspanners (1) zwischen zwei Sonnenkollektoren signalisiert, der Kollektorspanner (1) aus einem als Niederhalter dienenden Oberteil (2) und einem als Montagehilfe dienenden Unterteil (3) besteht, wobei die mechanische Anzeigevorrichtung (4) im Unterteil integriert ist, und wobei eine Schraube (5) Oberteil (2) und Unterteil (3) vertikal im Zentrum durchgreift und an der Unterseite mit einer zugeordneten Mutter (6) zum Eingriff in die mindestens eine Trägerschiene versehen ist,
**dadurch gekennzeichnet, dass** das als Niederhalter dienende Oberteil (2) an zwei zugeordneten seitlichen Stegen (7) des Unterteils (3) in Längsrichtung geführt ist, und dass das Oberteil (2) in Längsrichtung über das Unterteil (3) beidseitig übersteht und länger als das Unterteil (3) bemessen ist, so dass es mit seinen beiden Endbereichen jeweils in den seitlichen Vorsprung oder eine ' Hinterschneidung im unteren Bereich des einfassenden Rahmens eines Sonnenkollektors eingreift, wobei
das als Montagehilfe dienende Unterteil (3) mit integrierter mechanischer Anzeigevorrichtung (4) eine symmetrische Gestaltung besitzt und in jeder der Hälften einen unabhängig voneinander gelagerten Schieber (9) aufnimmt, der ein Fußende und zwei als Anzeige dienenden kopfseitige Endbereiche aufweist, und das Unterteil (3) außerhalb der längs verlaufenden seitlichen Stege (7) zum Führen des Oberteils (2) Vorsprünge (10) mit Aufnahmekammern (11) für die als Anzeige dienenden Endbereiche der Schieber (9) sowie nach oben offene Durchbrechungen (12) als Sichtfenster aufweist, wobei davon auf jeder Seite zwei angeordnet sind, wobei das Fußende als Tastfläche (13) an einem Sonnenkollektor einem Vorsprung und/oder einer Begrenzung einer Hinterschneidung zugeordnet ist, und das Erreichen der richtigen Position bei der Montage des Kollektorspanners (1) zwischen zwei Sonnenkollektoren signalisiert wird, indem der Schieber (9) nach innen in das Unterteil (3) geschoben wird und dessen beide kopfseitige Endbereiche (14) sich jeweils in der zugeordneten Aufnahmekammer (11) unter die als Sichtfenster dienende Durchbrechung (12) verschieben.

2. Befestigungsvorrichtung nach Anspruch 1,
**dadurch gekennzeichnet, dass** das Oberteil (2) bügelartig nach oben gewölbt ist und an seiner Unterseite in den beiden Endbereichen Aussparungen oder Flächen (8) für den Eingriff mindestens einer zugeordneten Zentrierhilfe auf der Oberseite des Unterteils (3) aufweist.

3. Befestigungsvorrichtung nach einem der Ansprüche 1 oder 2,
**dadurch gekennzeichnet, dass** ein Schieber (9) im Wesentlichen T-förmig gestaltet ist, wobei das Fußende als Tastfläche (13) vorgesehen ist, wobei die beiden kopfseitigen Endbereiche (14) jeweils als Teil der Anzeige dienen und in einer zugeordneten Aufnahmekammer (11) des Unterteils (3) gelagert sind, und wobei am Längssteg des T-förmigen Schiebers ein Quersteg (15) angebracht ist, welcher mit einer in Längsrichtung wirkenden Federvorrichtung am Unterteil (3) korrespondiert.

4. Befestigungsvorrichtung nach einem der Ansprüche 1 bis 3,
**dadurch gekennzeichnet, dass** die in Längsrichtung wirkende Federvorrichtung am Unterteil (3) gelagert ist, wobei jeweils zwei symmetrisch angeordnete, beim Erreichen der richtigen Position bei der Montage vorgespannte Federelemente (16) mit den zur Längsachse des Unterteils (3) gerichteten Enden auf den Quersteg (15) am Schieber (9) wirken und ansonsten jeweils das Fußende eines Schiebers (9) als Tastfläche (13) so aus dem Unterteil heraus drücken, dass dieses stirnseitig übersteht.

5. Befestigungsvorrichtung nach Anspruch 4,
**dadurch gekennzeichnet, dass** die Federelemente (16) am Unterteil (3) angeformt und in zugeordneten Aussparungen (17) am Unterteil (3) gelagert sind.

6. Befestigungsvorrichtung nach einem der Ansprüche 3 bis 5, **dadurch gekennzeichnet, dass** der Schieber (9) oder mindestens dessen kopfseitige Endbereiche (14) in einer anderen Farbe als das Unterteil (3) ausgeführt sind.

7. Befestigungsvorrichtung nach einem der Ansprüche 1 bis 6, **dadurch gekennzeichnet, dass** das Unterteil (3) mit mindestens vier weiteren, vertikal wirkenden Federelementen (18) als Zentrierhilfe versehen ist, wobei diese als laschenartige, schräg nach oben gerichtete Ausstellungen gestaltet sind und jeweils mit dem freien Ende an der Unterseite des Oberteils (2) in zugeordnete Aussparungen eingreifen.

## Claims

1. Fastening device for at least one solar collector, with a lateral projection or an undercut in the lower region of the enclosing frame, in particular for what is referred to as above-roof and flat-roof installation, comprising at least one carrier rail for fastening on associated roof hooks or other installation systems, and at least one collector clamp (1) guided in or on the at least one carrier rail, wherein the collector clamp (1) has a mechanical display device (4) which signals when the correct position is reached during the installation of the collector clamp (1) between two solar collectors, the collector clamp (1) consists of an upper part (2) serving as a holding-down device and a lower part (3) serving as an installation aid, wherein the mechanical display device (4) is integrated in the lower part, and wherein a screw (5) reaches through the upper part (2) and the lower part (3) vertically in the centre and is provided on the lower side with an associated nut (6) for engagement in the at least one carrier rail, **characterized in that** the upper part (2) serving as the holding-down device is guided in the longitudinal direction on two associated lateral webs (7) of the lower part (3), and **in that** the upper part (2) protrudes over the lower part (3) on both sides in the longitudinal direction and is dimensioned to be longer than the lower part (3), and therefore said upper part engages with its two end regions in each case in the lateral projection or an undercut in the lower region of the enclosing frame of a solar collector, wherein the lower part (3) serving as an installation aid and having the integrated mechanical display device (4) has a symmetrical design and in each of the halves receives a slide (9), which slides are mounted independently of each other, the slide having a foot end and two head-side end regions serving as the display, and the lower part (3) has, outside the longitudinally running lateral webs (7) for guiding the upper part (2), projections (10) with receiving chambers (11) for the end regions of the slides (9), the end regions serving as the display, and also upwardly open apertures (12) as viewing windows, wherein two of the latter are arranged on each side, wherein the foot end as a touch surface (13) on a solar collector is assigned to a projection and/or to a boundary of an undercut, and the reaching of the correct position during the installation of the collector clamp (1) between two solar collectors is signalled by the slide (9) being pushed inwards into the lower part (3) and the two head-side end regions (14) of said slide being displaced in each case in the associated receiving chamber (11) under the aperture (12) serving as a viewing window.

2. Fastening device according to Claim 1, **characterized in that** the upper part (2) is arched upwards in the manner of a bow and, on its lower side in the two end regions, has recesses or surfaces (8) for engagement of at least one associated centring aid on the upper side of the lower part (3).

3. Fastening device according to either of Claims 1 and 2, **characterized in that** a slide (9) is of substantially T-shaped design, wherein the foot end is provided as a touch surface (13), wherein the two head-side end regions (14) each serve as part of the display and are mounted in an associated receiving chamber (11) of the lower part (3), and wherein a transverse web (15) which corresponds with a spring device, which acts in the longitudinal direction, on the lower part (3) is attached to the longitudinal web of the T-shaped slide.

4. Fastening device according to one of Claims 1 to 3, **characterized in that** the spring device acting in the longitudinal direction is mounted on the lower part (3), wherein in each case two symmetrically arranged spring elements (16) which are pretensioned when the correct position is reached during installation act with the ends directed towards the longitudinal axis of the lower part (3) on the transverse web (15) on the slide (9) and otherwise in each case push the foot end of a slide (9) as touch surface (13) out of the lower part in such a manner that said foot end protrudes on the end side.

5. Fastening device according to Claim 4, **characterized in that** the spring elements (16) are integrally formed on the lower part (3) and are mounted in associated recesses (17) on the lower part (3).

6. Fastening device according to one of Claims 3 to 5, **characterized in that** the slide (9) or at least the head-side end regions (14) thereof are realized in a different colour than the lower part (3).

7. Fastening device according to one of Claims 1 to 6, **characterized in that** the lower part (3) is provided with at least four further, vertically acting spring elements (18) as a centring aid, wherein said spring elements are configured as tab-like, obliquely upwardly directed protuberances and each engage with the free end on the lower side of the upper part (2) in associated recesses.

## Revendications

1. Dispositif de fixation pour au moins un capteur solaire avec une saillie latérale ou une contre-dépouille dans la zone inférieure du cadre de bordure, en particulier destiné à ce qu'on appelle le montage sur toit et sur toit plat, comprenant au moins un rail de support destiné à la fixation sur des crochets de toit affectés ou d'autres systèmes de montage ainsi qu'au moins un organe de serrage de capteur (1) guidé dans ou sur le rail de support au moins au nombre de un,
l'organe de serrage de capteur (1) présentant un dispositif indicateur (4) mécanique qui signale que la position correcte a été atteinte lors du montage de l'organe de serrage de capteur (1) entre deux capteurs solaires,
l'organe de serrage de capteur (1) se composant d'une partie supérieure (2) servant d'élément de retenue vers le bas et d'une partie inférieure (3) servant d'aide au montage, le dispositif indicateur (4) mécanique étant intégré dans la partie inférieure, et
une vis (5) pénétrant dans la partie supérieure (2) et la partie inférieure (3) verticalement au centre et étant, sur le côté inférieur, munie d'un écrou (6) affecté pour l'engagement dans le rail de support au moins au nombre de un,
**caractérisé en ce que**
la partie supérieure (2) servant d'élément de retenue vers le bas est guidée sur deux nervures (7) latérales affectées de la partie inférieure (3) dans la direction longitudinale, et **en ce que** la partie supérieure (2) dépasse de la partie inférieure (3) des deux côtés dans la direction longitudinale et est dimensionnée de façon plus longue que la partie inférieure (3) de telle sorte que, par ses deux zones d'extrémité, elle s'engage respectivement dans la saillie latérale ou dans une contre-dépouille dans la zone inférieure du cadre de bordure d'un capteur solaire,
la partie inférieure (3) servant d'aide au montage avec dispositif indicateur (4) mécanique intégré possède une forme symétrique et reçoit dans chacune des moitiés un curseur (9) supporté de façon indépendante l'un de l'autre qui présente une extrémité de pied et deux zones d'extrémité côté tête servant d'indicateurs,
et la partie inférieure (3) présente, à l'extérieur des nervures (7) latérales s'étendant en longueur pour le guidage de la partie supérieure (2), des saillies (10) avec des chambres de réception (11) pour les zones d'extrémité des curseurs (9) servant d'indicateurs ainsi que des découpes (12) ouvertes vers le haut en tant que regard, dont deux d'entre elles sont disposées de chaque côté, l'extrémité de pied étant, en tant que surface de touche (13) sur un capteur solaire, affectée à une saillie et/ou à une limitation d'une contre-dépouille, et l'obtention de la position correcte lors du montage de l'organe de serrage de capteur (1) entre deux capteurs solaires étant signalée par le fait que le curseur (9) est poussé vers l'intérieur dans la partie inférieure (3) et ses deux zones d'extrémité (14) côté tête coulissent respectivement dans la chambre de réception (11) affectée sous la traversée (12) servant de regard.

2. Dispositif de fixation selon la revendication 1,
**caractérisé en ce que** la partie supérieure (2) est bombée vers le haut à la façon d'un étrier et présente, sur son côté inférieur dans les deux zones d'extrémité, des évidements ou surface (8) pour l'engagement d'au moins une aide au centrage affectée sur le côté supérieur de la partie inférieure (3).

3. Dispositif de fixation selon l'une des revendications 1 ou 2,
**caractérisé en ce qu'**un curseur (9) est agencé essentiellement en forme de T, l'extrémité de pied étant prévue en tant que surface de touche (13), les deux zones d'extrémité (14) côté tête servant respectivement de partie de l'indication et étant supportées dans une chambre de réception (11) affectée de la partie inférieure (3), et une nervure transversale (15) étant mise en place sur la nervure longitudinale du curseur en forme de T et correspondant à un dispositif à ressort, sur la partie inférieure (3), agissant dans la direction longitudinale.

4. Dispositif de fixation selon l'une des revendications 1 à 3,
**caractérisé en ce que** le dispositif à ressort agissant dans la direction longitudinale est supporté sur la partie inférieure (3), dans lequel respectivement deux éléments à ressort (16) disposés de façon symétrique, pré-serrés lors de l'obtention de la position correcte lors du montage, agissent, avec les extrémités dirigées vers l'axe longitudinal de la partie inférieure (3), sur la section transversale (15) sur le curseur (9) et, sinon, extraient par pression respectivement la zone de pied d'un curseur (9) en tant que surface de touche (13) hors de la partie inférieure de telle sorte que celle-ci dépasse côté frontal.

5. Dispositif de fixation selon la revendication 4,
**caractérisé en ce que** les éléments à ressort (16) sont formés sur la partie inférieure (3) et sont supportés dans des évidements (17) affectés sur la partie inférieure (3).

6. Dispositif de fixation selon l'une des revendications 3 à 5,
**caractérisé en ce que** le curseur (9) ou au moins ses zones d'extrémité (14) côté tête est/sont réalisé(es) dans une autre couleur que la partie inférieure (3).

7. Dispositif de fixation selon l'une des revendications 1 à 6,
**caractérisé en ce que** la partie inférieure (3) est munie d'au moins quatre autres éléments à ressort (18) agissant verticalement en tant qu'aide au centrage, ceux-ci étant formés en tant que structures dirigées obliquement vers le haut, en forme de languette, et s'engageant dans des évidements affectés, respectivement par l'extrémité libre sur le côté inférieur de la partie supérieure (2).
